# EUROPEAN PATENT APPLICATION

(11) **EP 1 952 981 A1**
(43) Date of publication of application: **06.08.2008**
(21) Application number: 07101763.6
(22) Date of filing: 05.02.2007
(51) Int. Cl.: B32B 27/18, B32B 27/32, C08J 5/18

(54) **Stretched polyolefin materials**

(71) Applicant: Lankhorst Pure Composites B.V., 8607 AD Sneek (NL)
(72) Inventor: Jacobs, Johannes Antonius Joseph, 8447 EB Heerenveen (NL)
(74) Representative: van Loon, C.J.J.

(57) **Abstract**

The invention is directed to stretched polyolefin materials having an E-modulus of at least 20 GPa and a strength of at least 400 MPa, comprising a polyolefin and a nucleating agent, which material is obtainable by a process comprising a stretching step wherein the material is stretched at a stretch ratio of at least 16.

The materials of the invention can be produced by a process comprising the steps of: providing a compound of a polyolefin material and a nucleating agent, wherein the nucleating agent is dispersed preferably on a molecular scale in the polyolefin material, extruding this compound, followed by a stretching step wherein the material is stretched to a total stretch ratio of at least 16.

## Description

The invention is directed to stretched polyolefin materials having improved mechanical properties, in particular improved strength and stiffness (E-modulus).

From WO-A-03/08190 it is known that co-extruded polyolefin materials (tapes, films or yarns) of very high strength and stiffness can be produced by stretching these materials to high stretch ratios (*viz.* higher than 12). The E-modulus of these materials can be as high as at least 10 GPa, while the tensile strength can easily be at least 250 MPa. A preferred stretching process according to WO-A-03/08190 involves multi-stage stretching, preferably at different temperatures.

The present invention seeks to provide stretched polyolefin materials having comparable or even improved mechanical properties as compared to those obtained according to WO-A-03/08190, while not being limited to co-extruded materials.

It was found that the use of certain additives, in particular nucleating agents, in combination with polyolefins leads to products that can be stretched at much higher stretch ratios of the polyolefins and thus may provide a polyolefin material having very favorable final mechanical properties, in particular an excellent stiffness and/or strength. Thus, in a first aspect the present invention is directed to a stretched polyolefin material having an E-modulus of at least 20 GPa and a strength of at least 400 MPa, comprising a polyolefin and a nucleating agent, which material is obtainable by a process comprising a stretching step wherein the material is stretched at a stretch ratio of at least 16.

Preferably the stretched polyolefin materials of the present invention have an E-modulus of at least 24 GPa, more preferably at least 26 GPa even more preferably at least 29 GPa.

Preferably the stretched polyolefin materials of the present invention have a strength of at least 500 MPa, more preferably at least 750 MPa, even more preferably at least 860 MPa.

The products of the invention are suitably produced by a process comprising the steps of: providing a compound of a polyolefin material and a nucleating agent, wherein the nucleating agent is dispersed preferably on a molecular scale in the polyolefin material, extruding this compound followed by a stretching step wherein the material is stretched to a total stretch ratio of at least 16. Dispersion of the nucleating agent may be achieved in a separate step wherein the nucleating agent is blended with a first portion of the polyolefinic material, thus producing a masterbatch (*e.g.* having a content of nucleating agent of up to 50 wt.%), and subsequently mixing this masterbatch with the remainder of the polyolefinic material, prior to the extrusion step. In this way good dispersion of the nucleating agent throughout the polyolefinic material is favoured.

In the context of this invention, the material is defined as meeting a minimum level of the total stretch ratio (TSR). TSR is defined as the degree of (monoaxially) stretching from an isotropic melt to the final tape or film. This is generally defined by the difference in speed between the stretch rollers. The actual value of the TSR can be determined from the birefringence and/or the E-Modulus of the final film, tape or yarn (in stretching direction).

The polyolefinic materials of the present invention, which can be obtained by the above-described process, can be co-extruded polyolefin materials, as well as single composition materials, e.g. polyethylene or polypropylene monomaterials. Also encompassed by the present invention are multifilament fibers, either based on co-extruded fibers or on monomaterial fibers. If the co-extruded materials of WO-A-03108190 are used in accordance with the present invention, products having even more improved values for stiffness and/or mechanical strength may be obtained.

It is believed that the polyolefinic materials of the present invention are novel *per se,* and differ from the prior art materials in particular in view of their high stiffness (E-modulus) of at least 20 GPa. The stiffness may suitably be determined by ASTM 3039-76.

The strength of the materials of the present invention is also high when compared to prior art materials. Typically tensile strength of more than 400 MPa, or even more than 500 MPa can be obtained. The tensile strength may suitably be determined by ISO 527.

The nucleating agent that is used in the present invention is preferably an inorganic nucleating agent. Preferred inorganic nucleating agents are selected from one or more components selected from plate shaped (layered) inorganic materials, such as natural or synthetic nanoclays, nanoclays modified with organic groups; fibrous or needle shaped materials, such as metal whiskers, carbon whiskers or nanotubes; spherical materials; zeolites; alumina; silica; and alumino or magnesium silicate materials. These materials are preferably used in a very finely divided form, usually also referred to as nano-materials (*e.g.* nano-clays). The particles making up these materials may have for instance at least one dimension in the nanomolecular scale, *e.g.* 1-100 nm, whereas in the other dimensions it can be several tens or hundreds of nm, e.g. 10- 1000 nm. Suitable clays are for instance clays of the smectite type, in particular montmorillonite, such as the commercially obtainable Nanocor^{™}, but also needle-shaped materials. Suitable zeolites are for instance ZSM-5, zeolite beta, mordenite, ferrierite, and/or zeolite Y.

It is also possible to use organic nucleating agents, for these materials generally a higher stretch ratio is needed to obtain the improved mechanical properties as compared with the inorganic nucleating agents. Suitable organic nucleating agents are sorbitol derivatives, such as 1,3:2,4-di(3,4-dimethylbenzylidene) sorbitol (DMDBS), commercially obtainable under the trade name Millad^{™}, *e.g.* Millad^{™} 3988.

Preferably the amount of nucleating agent is less than 10, more preferably less than 5, even more preferably less than 3 wt.%, yet even more preferably less than 2 wt.%, most preferably about 1 wt.%, based on the weight of the final (stretched) material. The minimal amount of additive may vary, and is typically around 0.01 wt.%, preferably around 0.05 wt.%, more preferably around 0.1 wt.%. The degree of dispersion of the nucleating agent (in particular nanoclay) in the polymeric material may range from an intercalated structure to a completely exfoliated structure (i.e. the highest degree of dispersion,wherein the particles making up the nucleating agent are completely separated from each other by the polymer material, preventing agglomeration of the additives). Most preferably, the nucleating agent (*e.g.* nano-additive) is nearly completely to completely exfoliated. The nucleating agent can be provided either separately or together with the polymer in liquid, powder or pellet form. Also it can be provided as a (concentrated) masterbatch separately or together with the rest of the polymeric material. Also it can be premixed and/or compounded with the polymeric material before it is provided to the extruder.

It is highly surprising the additives in these low dosages produce such a marked influence on the stretchability of the polyolefin materials, and by result on their mechanical properties after stretching (because the materials can be stretched further, their mechanical properties can be improved vis-à-vis the prior art materials). Without wishing to be bound by theory, it is believed that the well-dispersed nanoparticles act as nucleating agent or nucleator, or even a "supernucleator", thus controlling the crystallization process of the polymer. The nanoparticles facilitate the stretching process. This results in a high stretching ratio, which may be close to the theoretical maximum. US-A-7 074 483 teaches that the addition of nucleating agents, in particular certain sorbitol derivatives to an extruded mixture may have a positive effect on the rate of crystallization of the melt.

An aspect of the present invention is that the stiffness of the polymeric materials increases linearly with drawing ratio up to very high stretching ratios. In accordance with the present invention, total stretch ratios of more than 21.3, preferably more than 22, more preferably more than 25 may be attained. For instance, a polypropylene material having a stiffness of as high as 22 GPa and a strength of 800 MPa can be produced by stretching to a stretch ratio of 26. This is remarkable, because in a typical prior art production process polypropylene normally tends to break at stretch ratios as low as 20 or even less.

As mentioned hereinabove, if an organic nucleating agent is used, the stretch ratio is preferably higher than 22. For inorganic nucleating agents lower stretch ratio's, e.g. as low as 16 or more, may be sufficient.

The polyolefinic materials used in the present invention comprise preferably polyethylene (PE) or propylene (PP), or blends thereof. More preferably the polymeric materials comprise propylene. With respect to recycling of the products produced from polyolefin films, tapes and yarns it would be an advantage if all components of the material could be classified as the same material, such as polypropylene or polyethylene. The term "polypropylene" is used herein in its ordinary meaning to include also copolymers of propylene monomeric units and other monomeric units (in particular ethylene monomeric untits), but wherein the majority of the total number of monomeric units is propylene. Similarly, the term "polyethylene" includes copolymers of ethylene and other monomers (particularly propylene monomers), but in which copolymers the majority of the total number of monomers is ethylene.

It is highly advantageous to produce a material that can be recycled. This requires that the resulting recycled material can be considered as one material, instead of a blend of various components (no contamination). This is also possible in accordance with the present invention.

The stretching may be carried out in a single step, but it is also possible to use a multiple stretching step. By applying a multiple stretching step, in particular a two-stage stretching wherein the first stretching is performed at a lower temperature than the second, even higher stretch ratios may be obtained, leading to products having even higher values for stiffness and/or strength.

In another embodiment of the present invention, the nucleating additive added to one or more of the layers of a co-extruded material, in particular to produce a material similar to PURE^{™}, the preparation of which is detailed in WO-A-03/08190. To this end, the clay or other nanomaterial is added to the polyolefin blend from which one or more of the layers making up the co-extruded material is produced. The stretch ratio for materials in accordance with the present invention based on these co-extruded tapes, can be even lower, e.g. 15 or more. Already at these low stretch ratios a (co-extruded) material can be obtained having an E-modulus of at least 20 GPa and a strength of at least 400 MPa. On the other hand, the co-extruded tapes thus produced can be subjected to stretch ratios that are even higher than those described in WO-A-03/08190. Consequently, materials can be obtained having a very high stiffness. Thus in a specific embodiment, the present invention is directed to a monoaxially drawn polyolefin multilayer film, tape or yarn of the AB or ABA type, having a stretch ratio of more than 15, having an E-modulus of at least 20 GPa, substantially consisting of a central layer (B) of a polyolefin selected from polyethylene and polypropylene, and one or two other layers (A) of a polyolefin from the same class as the material of the central layer B, the DSC melting point of the material of the said other layers (A) being lower than the DSC melting point of the material of the said central layer (B), wherein the central layer (B) is between 50 and 99 wt.% of the material and the other layers (A) between 1 and 50 wt.%. The nucleating additive can be present in any one of the layers (A) or (B) of this embodiment. Preferably it is present in all layers.

The materials of the present invention can be in the form of tapes, films, yarns and/or multifilaments.

In practice, the thickness of the tape, film or yarn will generally be up to 300, preferably between 10 and 300 µm. This is governed by the original film thickness and the stretch ratio, in particular the ratio of the speeds of the stretch rollers. The width of the tapes can vary over a wide range, such as from 25 µm up to 50 cm or more. The width of the films can also vary over a wide range, e.g. from 1 cm up to 150 cm or more.

## Claims

1. Stretched polyolefin material having an E-modulus of at least 20 GPa and a strength of at least 400 MPa, comprising a polyolefin and a nucleating agent, which material is obtainable by a process comprising a stretching step wherein the material is stretched at a stretch ratio of at least 16.

2. Material according to claim 1, wherein the nucleating agent is selected from inorganic nucleating agents and organic nucleating agents.

3. Material according to claim 2, wherein the nucleating agent comprises an inorganic nucleating agent selected from plately shaped (layered) inorganic materials (in particular natural nanoclays, synthetic nanoclays, or nanoclays modified with organic groups); fibrous or needle shaped materials (in particular metal whiskers, nanoclays, carbon whiskers or nanotubes); spherical materials; zeolites; alumina; silica; aluminosilicate materials; and combinations thereof.

4. Material according to claim 2, wherein the nucleating agent comprises an organic nucleating agent selected from sorbitol derivatives, which material is preferably obtained at a stretch ratio of more than 22.

5. Material according to any of the previous claims, wherein the nucleating agent comprises particles having at least one dimension of 1-100 nm.

6. Material according to any of the previous claims, wherein the additive is used in an amount of 0.01 to 10 wt.%, based on the weight of the final stretched material.

7. Material according to any of the previous claims, wherein said stretch ratio is more than 20, preferably more than 25, more preferably more than 26.

8. Material according to any of the previous claims, comprising two different materials are co-extruded polyolefin materials, in particular two different polypropylene materials, wherein said nucleating agent is present in at least one of said different materials.

9. Material according to the previous claim, which is a monoaxially drawn polyolefin multilayer film, tape or yarn of the AB or ABA type, having a stretch ratio of more than 15, having an E-modulus of at least 20 GPa, substantially consisting of a central layer (B) of a polyolefin selected from polyethylene, polypropylene and combinations thereof, and one or two other layers (A) of a polyolefin from the same class as the material of the central layer B, the DSC melting point of the material of the said other layers (A) being lower than the DSC melting point of the material of the said central layer (B), wherein the central layer (B) is between 50 and 99 wt.% of the material and the other layers (A) between 1 and 50 wt.%.

10. Material according to the previous claim, wherein the nucleating additive is in the central layer.

11. Process for producing a stretched material, comprising the steps of: providing a compound of a polyolefin material and a nucleating agent, wherein the nucleating agent is dispersed preferably on a molecular scale in the polyolefin material, extruding this compound, followed by a stretching step wherein the material is stretched to a total stretch ratio of at least 16.

12. Process according to claim 11, further comprising a step wherein said nucleating agent is first blended with a first portion of the polyolefinic material, thus producing a masterbatch, and subsequently mixing this masterbatch with the remainder of the polyolefinic material, prior to the extrusion step.

13. Process according to any of the claims 11-12, wherein said stretching comprises more than one stretching step, preferably carried out at different temperatures.

14. Process according to any of the claims 11-13, wherein at least one of said stretched materials is co-extruded with another polyolefinic material, which other polyolefinic material is optionally also produced in accordance with the process according to any of the claims 11-13.
